# EUROPEAN PATENT SPECIFICATION

(11) **EP 0 420 424 B1**
(45) Date of publication and mention of the grant of the patent: **03.12.1997**
(21) Application number: 90309707.9
(22) Date of filing: 05.09.1990
(51) Int. Cl.: G06F 17/30

(54) **A method of information retrieval for a database system**
Verfahren zur Informations-Wiedergewinnung für ein Datenbanksystem
Méthode de recherche documentaire pour un système de base de données

(30) Priority: 20.09.1989 JP 242421/89
(43) Date of publication of application: 03.04.1991
(73) Proprietor: International Business Machines Corporation, Armonk, N.Y. 10504 (US)
(72) Inventor: Mitsui, Kinichi, Kawasaki-shi, Kanagawa-ken (JP)
(74) Representative: Moss, Robert Douglas

(56) References cited:
- DE-A- 3 901 485
- US-A- 4 358 824
- JOURNAL OF CHEMICAL INFORMATION AND COMPUTER SCIENCES vol. 15, no. 1, February 1975, pages 32 - 39 H. S. HEAPS 'Data Compression of Large Document Data Bases'

## Description

### Field of the invention

The present invention relates to a method of information retrieval for database system and, more particularly, to improving quantitative retrieval by ranking retrieval results in order of the scores given to them.

### Background of the Invention

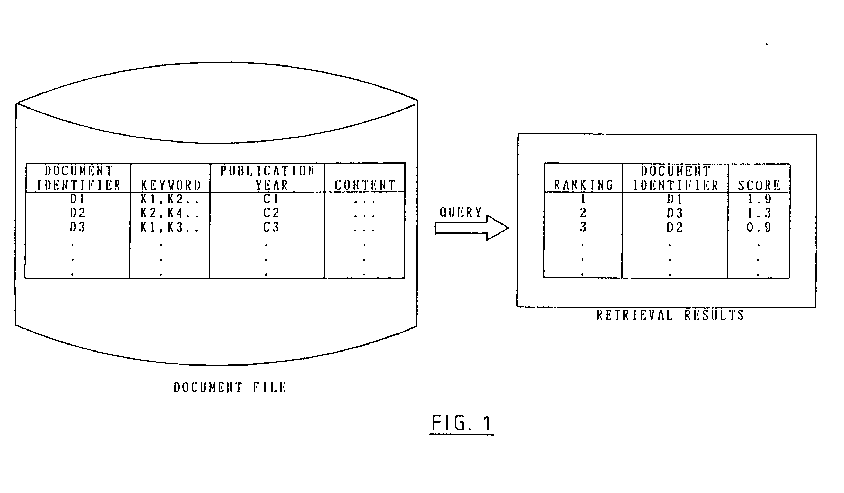

Quantitative retrieval in information retrieval means calculating scores for objects when a retrieval query is made, and then outputting the retrieval objects sequentially from the one with the highest score down. The retrieval objects may refer to documents or patent information, etc. Order-ranking is done to flexibly address queries which are sometimes ambiguous or imperfect, by quantitatively assessing the retrieval conditions. An example of quantitative retrieval is shown in Figure 1, with documents as an example of retrieval objects. Each document is assumed to be given a keyword used for its retrieval and a numerically represented attribute such as the publication year. Now, assuming as the given retrieval conditions that the document shall have K1 or K2 as its keyword, and that the value of the publication year C1 shall be as large as possible, a score V1 is given when a document contains K1, a score of V2 when it contains K2, and V3 in correspondence with the value of C1. The total score is given by their sum, whereby it is possible to give each document its score.

An expression of the score calculation in a numerical formula is given by V1 * K1 + V2 * K2 + f(C1). If a document contains K1 and K2, 1 is substituted for K1 and K2; if not, 0. f is assumed to be a function which is 1 when the publication year is most recent, and which has the smaller values, the older the publication year. In this way, the score may be calculated. By calculating the scores for all documents to rank them, it is possible to output the results in sequence starting with the document which best meets the conditions.

The formula for calculating the score is not limited to an operation such as calculating a sum, but a system of selecting the larger of two values, for example, max (V1 * K1, V2 * K2), may also be applied. In this way, various score calculating methods may be contemplated for retrieval request.

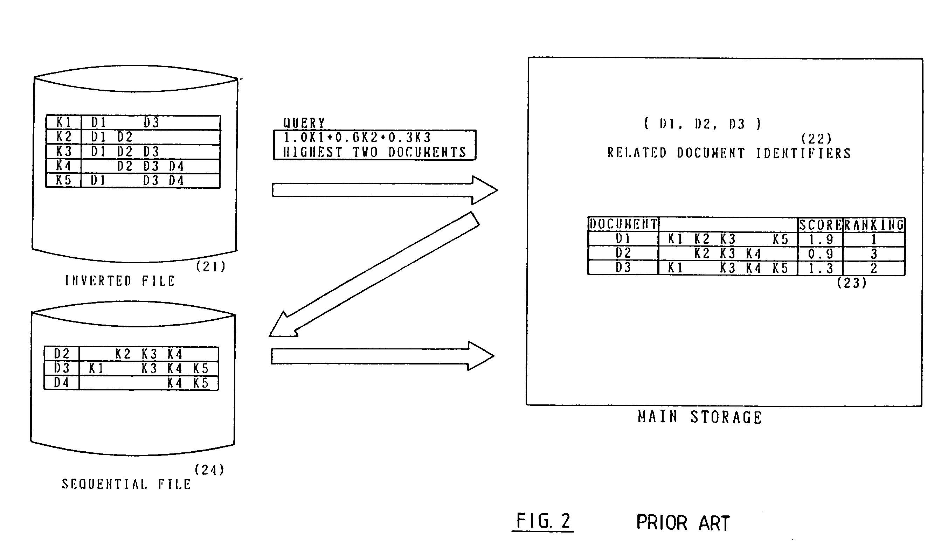

Generally, the number of retrieval objects in document retrieval, etc., is enormous and it is impractical to access all of retrieval objects every time a query is made because of the need to access a large amount of outside memory. As introduced into the literature by Salton et al., "Extended Boolian Information Retrieval, Communications of the ACM, Vol. 26 No. 12, 1983", a transposed file is utilized for making retrieval at high speed in this type of information retrieval. How this procedure is operated is shown in Figure 2. The transposed or inverted file (21) permits retrieval objects having the values of keywords and numerical values to be traced with these values as indexes. Against this, the original file on which documents are arranged in proper sequence is called a sequential file (24). It does not matter whether the contents of each document are contained in the sequential file or are stored outside it. In the latter case, the information on the position where the contents of the document are stored should be included in the sequential file. Using the transposed file, all document identifiers containing even any one of the keywords and/or the numerical values necessary for calculating scores are determined. This may be done by summing the sets of document identifiers corresponding the relevant keywords and/or numerical values (22). The sequential file is accessed for the selected document identifiers, thereby obtaining their sets of keywords, and their scores calculated. The document identifiers can then be ranked in order and outputted (23).

When a transposed file is used in this way, the need to access all documents to calculate scores is generally obviated, thus enabling retrieval to be made more rapidly. Although the transposed file also needs access to external storage, information having the same indexes is stored in physical proximity, thus enabling the necessary content to be extracted using the indexes with a low access frequency.

Since the sequential file and the transposed file are very large in typical information retrieval situations, the information is kept in external storage and part of the files is transferred to the internal storage for making a decision as to the retrieval conditions or for calculation of scores, etc. Since a relatively long time is required for accessing the external storage, it is preferable to access external storage as infrequently as possible in order to attain a higher speed of retrieval.

US 4358824 discloses a database retrieval system in which queries are based on key words which may have different weights. A word index file is used to locate documents which contain one or more keywords, and to calculate a retrieval value for those documents. Finally, documents having the highest retrieval values are output from main memory.

US 5168565 discloses a document retrieval system having an inverted file which links keywords to corresponding stored documents. To retrieve a document, the user specifies certain keywords that are used to calculate the relevance of documents, which can then be retrieved accordingly.

### Disclosure of the Invention

The invention provides in a database system including a sequential file in external storage from which data relating to a retrieval object are outputted by inputting an identifier for said retrieval object;
a transposed file in external storage containing data, including identifiers, relating to retrieval objects that include a specified access key, and from which said data are outputted by inputting the specified access key; and
query inputting means for inputting a query expressed as a combination of specified access keys with given weighting coefficients, and the number n of retrieval objects to be outputted;
an information retrieval method comprising the following steps:
in response to the input of a query, accessing the transposed file for each access key in turn, wherein the access keys are selected from the inputted query based on the values of said weighting coefficients, and copying into main storage data from the transposed file that relates to each access key;
calculating both the instantaneous query score and the maximum anticipated final query score for each retrieval object, based on the contents of the inputted query and the data copied from the transposed file;
establishing the n retrieval objects with the highest score by stopping the selection of access keys when the retrieval object with the n th largest instantaneous query score has an instantaneous query score larger than the maximum anticipated final query score of each retrieval object having an instantaneous query score less than that of said retrieval object with the n th largest instantaneous query score; and
accessing the sequential file using the identifiers of said retrieval objects with the highest query score.

The invention also provides in a database system including a sequential file in external storage from which data relating to a retrieval object are outputted by inputting an identifier for said retrieval object;
a transposed file in external storage containing data, including identifiers, relating to retrieval objects that include a specified access key, and from which said data are outputted by inputting the specified access key; and
query inputting means for inputting a query expressed as a combination of specified access keys with given weighting coefficients, and the number n of retrieval objects to be outputted;
an information retrieval method comprising the following steps:
in response to the input of a query, accessing the transposed file for each access key in turn, wherein the access keys are selected from the inputted query based on the values of said weighting coefficients, and copying into main storage data from the transposed file that relates to each access key;
calculating both the instantaneous query score and the maximum anticipated final query score for each retrieval object, based on the contents of the inputted query and the data copied from the transposed file;
establishing the n retrieval objects with the highest score to sufficient accuracy by stopping the selection of access keys when the retrieval object with the n th largest instantaneous query score has an instantaneous query score larger than the maximum anticipated final query score of each retrieval object having an instantaneous query score less than that of said retrieval object with the n+m th largest instantaneous query score, where m is an integer larger than 2; and
accessing the sequential file using the identifiers of said retrieval objects with the highest query score.

In the prior art, frequency of access to external storage is reduced by narrowing the range of related retrieval objects by initially using a transposed file. However, in quantitative retrieval, outputting objects with high scores is generally all that is required, outputting those with low scores not being necessary. Because of this, accessing objects from the sequential file ranked low in query score is unnecessary. The invention uses quantitative information retrieval for reducing the frequency of access to an output memory by ranking retrieval objects using only information from the transposed file, thereby speeding up information retrieval.

In some circumstances the n retrieval objects with the highest query score can be determined exactly without having to examine all the access keys, in which case only the part of the transposed file necessary for effective ranking is accessed, thereby avoiding accessing unnecessary parts. In other circumstances it may be sufficient to determine only a certain number of objects (n+m), which include the n retrieval objects with the highest query score. In this case perfect order-ranking is not achieved, but under the relieved conditions the frequency of accessing the transposed file can be greatly reduced.

Preferably a transposed table is prepared in main storage from the data copied from the transposed file; and a sequential table is prepared in main storage by interchanging the row and columns of the transposed table, the data therein being used during said step of calculating the query scores.

In the case where the access keys include access keys differing in weight depending on the retrieval objects, it is preferred that the access keys are selected on the basis of the product of the weight of each access key and said given weighting coefficient of each access key. This approach helps avoid the problem with such numerical attribute access keys that many factors have a bearing on the query score and therefore having to access all such related objects, thereby reducing the range-narrowing effect. Preferably for each access key differing in weight depending on the retrieval objects, the retrieval object identifiers are arranged in the transposed file in order of the weight.

The invention therefore increases the speed of information retrieval by reducing as much as possible the frequency of accessing the sequential file and the transposed file and by using only the transposed file for score calculation for quantitative retrieval. Furthermore, only the part of the transposed file most significant for ranking, as determined by anticipated scores, need be accessed, avoiding accessing unnecessary parts of the transposed file as much as possible.

The invention is effective not only for speeding up retrieval based on keywords, such as document retrieval, but also when quantifying data base queries using general numerical quantities as well.

### Brief Description of the Drawings

Figure 1 is a diagram illustrating the principle of the quantitative retrieval;
Figure 2 is a diagram illustrating information retrieval in a database system in the prior art;
Figure 3 is a diagram showing the basic operation of an information retrieval method according to the invention;
Figure 4 is a diagram illustrating an improved algorithm, for a preferred information retrieval method; and
Figure 5 is a diagram illustrating a modification of the information retrieval method of Figure 4 for the case in which a numerical value attribute is included in a query.

### Detailed Description

### (1) Basic algorithm

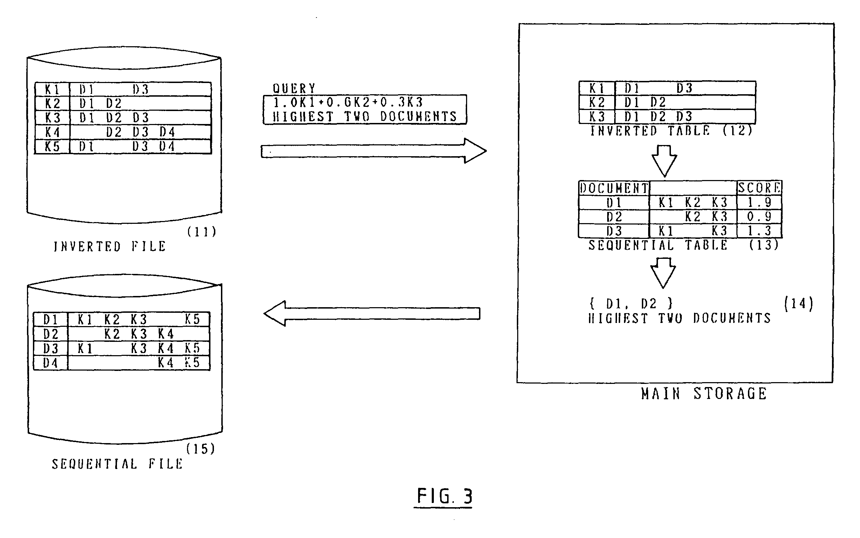

The basic algorithm will now be described with reference to Figure 3. In a sequential file (15), sets of keywords belonging to document identifiers are stored. In a transposed file (11), keywords and sets of document identifiers which contain keywords are stored.

Figure 3 illustrates a query and the operation according to the invention of interchanging the rows and the columns of the transposed table on the main storage for each document. The method of this invention and the conventional method are compared in terms of access to the external storage with reference to Figures 2 and 3, and according to whether access to the sequential file is involved for documents with low scores. When it is enough to retrieve only documents with high scores like those down to the upper n-th order, the method of the invention should require reduced access to the external storage.

Using the method of the invention represented by Figure 3; the transposed file is accessed for keywords K1, K2 and K3, and the sequential file is accessed for document identifiers D1 and D2. Using the conventional method represented by Figure 2, the transposed file is accessed for keywords K1, K2 and K3, and the sequential file is accessed for document identifiers D1 and D2 and D3. From a comparison of these two methods, it will be seen that because the need for accessing the sequential file for the document identifier D3 is avoided, access time is saved.

The time required for accessing external storage will be now evaluated for both the method of this invention and the conventional method. First, code letters are defined as follows:
N qkey Number of keywords used for query
N keydoc Average number of document identifiers per keyword on transposed file
N related Number of related documents which contain at least one of the keywords related to the query
N output Number of documents requested to be outputted
T inv Mean time involved for extracting one record from transposed file
T trans Time required for preparing transposed table on main storage
T union Time required for determining union of sets of documents identifiers for keywords
T seq Mean time required for extracting one record from sequential file
T query Mean time for calculating value of query function
T sort Time required for sorting value of query function

The time required for the approach of this invention is given by,
T inv x N qkey + T trans + T query x N related + T sort + T seq x N output

Here, the first term represents the time required to access the transposed file; the second term, the time for preparing a transposed table on the main storage; the third term, the time required for calculating the value of the query function; the fourth term, the time required for sorting; and the fifth term, the time required for accessing the sequential file for a definite number of upper order documents.

In contrast, the time required by the conventional system is given by,
T inv x N qkey + T union + T seq x N related + T query x N related + T sort.

Here, this method differs from the method of the invention in that its second term represents the time for determining the related documents through union and the third term the time required for accessing the sequential file for those related documents. Subtracting the required time for the former system from the required time for the latter system gives:
(T union - T trans) + T seq x (N related - N output).

Concerning the term (T union - T trans), T trans has a slightly larger value, since it represents the operation of transposing the transposed table, as against the calculation of a simple union. However, this operation may be performed using the hash technique, and the calculation is conducted in the main storage; therefore, the processing can be done at a relatively high speed. Accordingly, the first term does not have a very large value. In contrast, T seq designates the mean time required for disk access. This value depends on the system and it is difficult to define a typical value, but it is normally substantially slower than calculation in the main storage. It may be noted that the smaller the number of related documents to be outputted, the more efficient method of the invention will become.

For example, the time required for one disk access is on average from about several milliseconds to several tens milliseconds for medium and large machines. In contrast, the result of an experiment with the main storage calculation programmed in a Lisp, was found to be less than 1 millisecond per retrieval object. The Lisp involves a very large frequency of calls, and therefore its processing speed is slow, as compared with ordinary programming languages. Accordingly, the speed is expected to be further increased when the same calculations are made using common procedural type languages. In large machines, ingenious methods can be used to achieve higher disk access speeds, but in lower level machine types, the time difference between calculation on the main storage and the disk access is considered to be larger still.

What may be deduced from the above description is that according to the method of the invention, speed-up is obtained by accessing only the information really necessary for the output from the sequential file. As a result, when only a small number of related documents are to be outputted and where the disk access is very slow, compared with the operation speed, the method of the invention is much more efficient than the conventional method.

The order of calculation of T trans and T union is briefly commented as follows: In transposing the transposed table, first, a hash table with the document identifiers as keys is prepared; then, the corresponding keywords are added to the corresponding positions on the hash table according to the document identifiers gathered from the transposed file. Assuming that the average number of documents containing a certain keyword is constant, the calculation is of linear order relative to the number of keywords. Similarly, the part where related documents are determined through union can be calculated to be of linear order. With regard to the number of documents, with increasing number of documents, the number of documents containing a certain keyword increases on linear order, and the above discussion suggests that linear order is applicable also to the number of documents. Thus it is understood that these two systems, as compared here above, have the amenable property that calculation of T trans and T union can be made on a linear order basis with regard to the calling length or the size of data base.

While in the conventional system, a reference table of document identifiers and the keywords contained in the respective pertinent documents needs to be contained in the sequential file, this basic algorithm does not invariably require such a table.

### (2) Improved algorithm

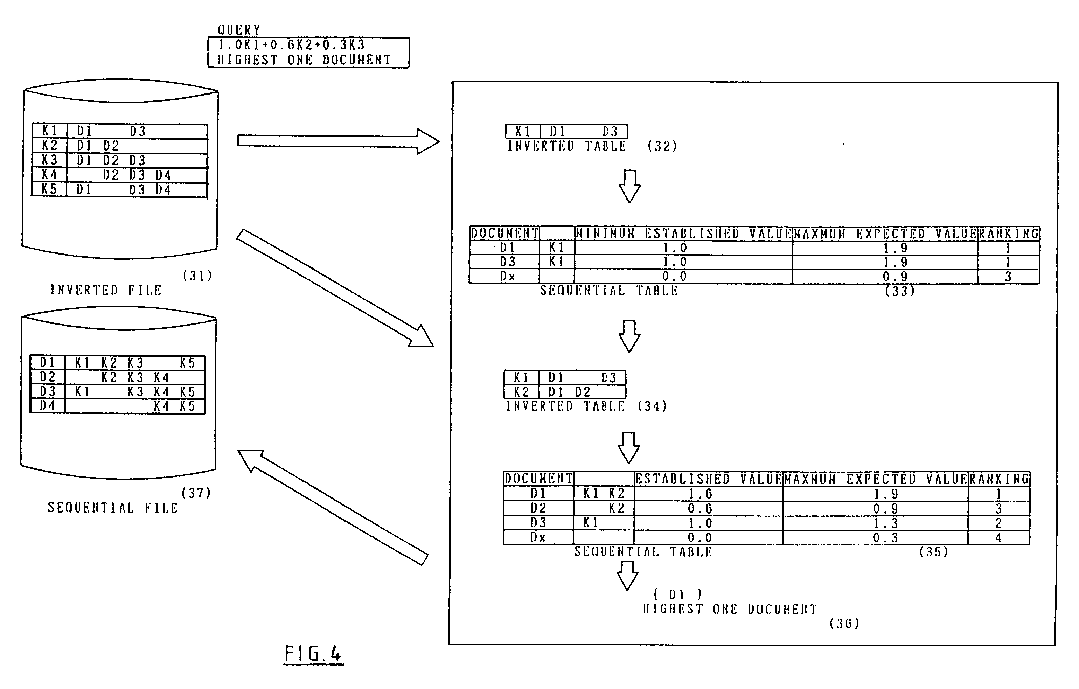

An improvement for further reducing the frequency of accessing the transposed file, with the above-described method as a basis, will now be described with reference to Figure 4. In accessing the transposed file with the keywords related to the calculation of the scores as bases, access should be ordered from the most to least influential keyword with regard to rank. In the example of Figure 4, the weight of K1 is largest, so that documents containing this keyword and those not containing it differ greatly in score. The transposed file (31) is accessed for K1, to draw up a transposed table on the main storage (32). Further, the rows and the columns are interchanged (33). Here, a minimum established value and a maximum anticipated value of the score may be determined for each document. The minimum established value in this example is the lower limit of the score calculated from only the keyword which has been examined up to this stage, and the maximum anticipated final value is the upper limit of the final score, when the remaining keywords are assumed to meet all the query conditions. Dx in Figure 4 represents all remaining documents. At this point, tentative rank orders are given according to the orders of the minimum established values. If for example only the first two places are required as the final result, documents in the third place or below must not rise above the second place. This is guaranteed without having to examine the remining keywords, because the maximum anticipated values of third place and below are smaller than the minimum established value of second place. In this instance, it is proper to access on the sequential file documents down to second place to obtain the exact score by examining the keywords. Accordingly, using this modification of the basic algorithm of the invention, it is enough to access the transposed file for the keyword K1 only, where formely access to the transposed file for keywords K1, K2, and K3 would have been required. Therefore, the access time is further reduced over the prior art.

If in this example, the condition is to take only first place, this can not be determined unless another keyword is examined, because the maximum anticipated value of the second place is larger than the minimum established value of the first place. When selecting the keyword to be examined next, one chooses the keyword which will maximize the minimum established value at the n-th order and which will minimize the maximum anticipated value of the (n+1)-th order. In the case of this example, K2 is selected (34) and the score is again calculated (35). This table indicates that the minimum established value at the first place exceeds the maximum anticipated value of the second place; therefore, the sequential file is accessed for the D1 document identifier (36), thereby ending the retrieval. This system will not necessarily require accessing the transposed file for all keywords in the query, thus producing speed-up.

In the example of Figure 4, the query is expressed as a linear combination of access keys; therefore, documents down to the n-th place can be established by examining the anticipated score value of the document with its query score (established value) in (n+1)-th place. However, if the query contains calculations involving max or min or comprises access keys having numerical value attributes there is a possibility that anticipated values of documents with their established values at the (n+2)-th position or lower will become larger than that of the document with its established value in the (n+1)-th place. A processing procedure which takes this into account is described below:
1. First select a keyword which most makes difference in rank order, access a transposed file and take into main storage a set of document identifiers containing the keyword. The method of selecting the keyword is to select the one that makes the largest the difference in score between documents which contain that keyword and those which do not.
2. Add into a sequential table in main storage the new information and (re)calculate the scores (minimum established value) of the documents in the sequential table, to rank the orders. If the number of the documents retrieved is not more than n, repeat steps 1 and 2 with regard to the next keyword. Interchanging rank orders may be done by recalculating the scores for the documents which have changed, without rearranging all documents every time. A practical way of doing this may be by constructing the data structure like that in balance blocks.
3. When the number of documents first exceeds n, an imaginary document which does not contain any of the previously mentioned keywords is added to the table at the lowermost postion. Of course, such a document has the lowest established value.
4. Assume that the lowest possible ranking is in (n+s)-th place. It is then possible to calculate the maximum anticipated score value when the document in (n+s)-th place contains keywords in the ideal way. If the maximum anticipated value in (n+s)-th place is smaller than the minimum established value in n-th place, it is evident that the documents in (n+s)-th place and below can not be ranked in n-th place or above. At this stage, the information in (n+s)-th place and below shall be deleted from the sequential table, with the document in (n+s-1)-th place newly ranked at the lowermost place.
5. If the lowermost order agrees with the n-th place, the ranking has now been established down to n-th place, and the procedure should be stopped. If not, the steps of 4 and 5 should be repeated until up-ranking of the lowermost order does not occur.
6. If the rank orders have not been established down to the n-th place, examine the transposed file, with the next keyword chosen, by repeating the steps from step 1. If the document in bottom position is not the imaginary one presumed in step 3; i.e. after the imaginary document has been deleted according to step 4, any documents which have not already been included in the sequential table, even if newly retrieved, may be neglected. This is because their inability to be ranked above the document in n-th place has already been established. The way of selecting the next keyword is to choose one which, when included, will most raise the minimum established value in n-th place, or which, when not included, will most lower the maximum anticipated value in (n+s)-th place.

An advantage of this system is the fact that the comparison of a minimum established value in n-th place with a maximum anticipated value in (n+1)-th place or below is efficiently achieved by contemplating the lowermost ranking as the limiting possibility of any document to be ranked above n-th place in the future. That is to say, the limit point below which no document may be ranked above n-th position in the future gradually competitively goes up, and the procedure should be stopped just as that limit coincides with the n-th position. The maximum anticipated value need not be determined for all documents in (n+1)-th place or below in the sequential table. Furthermore, it is advantageous in terms of efficiency not to leave any unnecessary information in the sequential table by deleting the information of the document in the previous lowermost position, when competitively raising the lowermost position, and then neglecting any documents which may be newly retrieved after the lowermost limit has begun competitively going up.

### (3) Handling numerical attributes

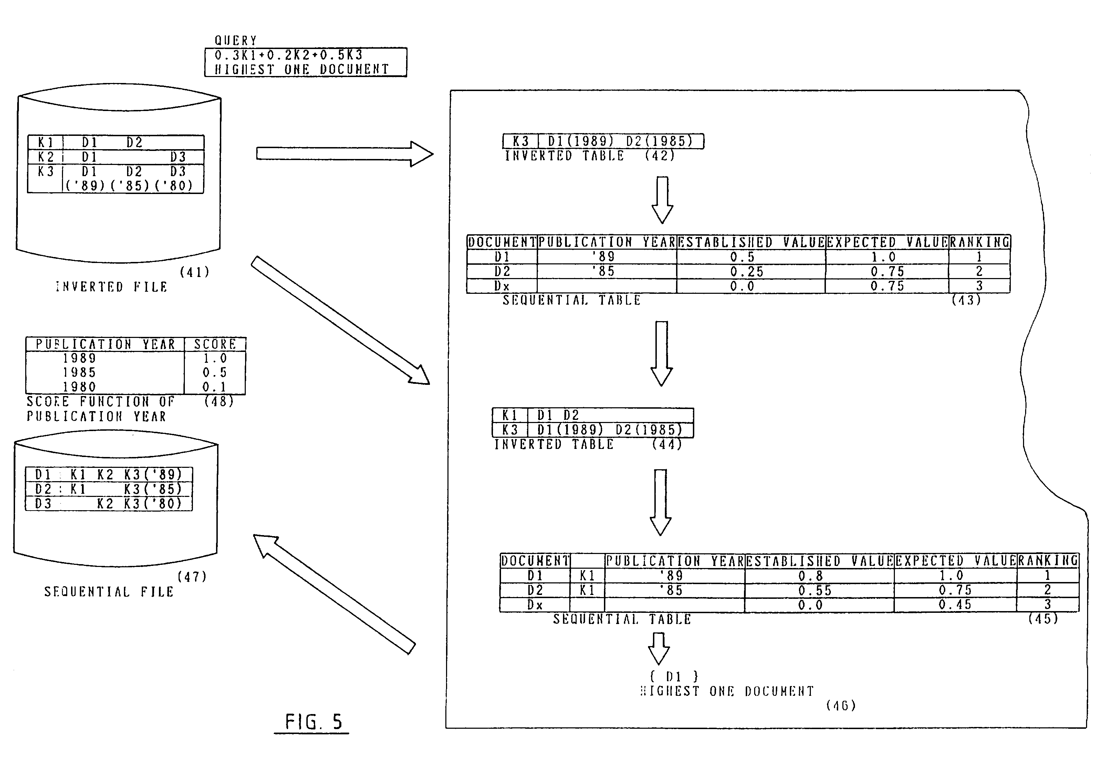

Next, a method for utilizing a numerical attribute like publication year for quantitative retrieval is described, with reference to Figure 5. When calculating the score relative to a numerical attribute, a function which gives a suitable score to an attribute value should be predetermined (48). In the above-described example, it has been expressed by f(C1). This function should change steadily, with changing attribute values. For example, the larger the attribute value, the higher score it has, or the nearer the attribute value to a certain value, the higher is its score.

With regard to the numerical attribute, a transposed file which relates each attribute value to each retrieval object may be prepared similarly as for keywords. In Figure 5, K3 denotes a numerical value attribute representing publication year (41). On the transposed file, the retrieval objects are arranged in the ascending or descending order of the attribute values, permitting high speed access in the ascending or descending order. This may be attained by making use of an existing technique like B-blocks.

Now, when a numerical attribute is generally used as a retrieval condition, the range of values influencing the score is wide, so that it is unavoidable to frequently access the external storage to access the overall range of the values influencing the score on the transposed file. When outputting only objects with high scores, there is a possibility that it is sufficient to access only the parts which give high scores where the record of the numerical attribute is concerned.

With regard to the access key for the numerical attribute, by utilizing a transposed file on which the retrieval object identifiers are sorted in the attribute order beforehand, the external storage is accessed sequentially from the part where the highest score may be obtained and, then, the retrieval may be ended at a point when the high rank orders have been established, while calculating the minimum established values and the maximum anticipated values in a similar manner to the system described in section (2).

According to the algorithms described above, once a key has been used, it is never used again. However when a numerical attribute key is handled, there is a possibility of reusing the key, so long as any document identifiers with function values that are potentially higher than 0 remain in the transposed file. However, after the key has been used, the maximum weight expected from said key is up-dated to its maximum anticipated value. Accordingly, depending on this value, there is a possibility of another key being used as the next key.

Explanation follows, using the example of Figure 5. One of the three terms of the query formula which can take a maximum value is 0.5K3 and, therefore, the publication year (K3) is chosen as the factor which most affects the score. The score is assumed to be higher, the later the document was issued. As the transposed file is accessed once, a number of document identifiers with high scores are obtained (42). Similarly as in the method of (2), a sequential table is prepared on the main storage, to calculate the minimum established values and the maximum anticipated values (43). If the rank orders down to the n-th position can not be established, a similar procedure should be repeated, with the next keyword or attribute including publication year to be examined selected (44 and 45). It should be utilized so that when calculating the maximum anticipated value, the scores following the numerical values will always be smaller than those preceding them. For example, for the anticipated value for Dx in (45), a maximum of 0.5 x 0.5 = 0.25 may be expected for the publication year, and 0.2 is added thereto, assuming it contains K2; then, the overall score will be up to 0.45 at the maximum. In this way, with regard to the transposed file, by having earlier access to parts which have a larger effect on the score, it is possible to avoid accessing unnecessary parts of the transposed file.

While this system has been described as an inventive idea for a numerical value attribute, it is quite similarly applicable when each keyword contained by individual retrieval objects is weighted with a score as a keyword attribute. For example, when a keyword Kx has a weight of 1.0 for a document D1, but it has a weight of only 0.5 for another document D2, the above discussion is quite similarly applicable, with the identifiers of the retrieval objects for each keyword arranged on the transposed file in the order of their weights.

### (4) A method of further reducing the frequency of accessing external storage by slack order-ranking

In sections (2) and (3), a minimum established value at the n-th place and the maximum anticipated value in (n+1)-th place and below are compared in judging whether access to the transposed file is to be stopped or continued. In contrast, if this judgment is made by comparing the minimum established value at n-th place with a maximum anticipated value in (n+m)-th position (m>2) and below, the difference between the n-th place and the (n+m)-th place and below may be expected to be larger than that between the n-th place and the (n+1)-th position and below. This makes for the possibility of accomplishing the determination of rank order more rapidly. As a particular processing procedure, similar steps to steps 1-6 described in section (2), "Improved algorithm", may be employed, except that the procedure is stopped at the point when the lowest position coincides with the (n+m)-th place.

However, the result of such ranking is such that it can only be said at the procedure ending point that documents with rank orders down to n-th place may be ranked within the top (n+m)-th places. Conversely, objects with rank orders above (n+m)-th place but outside the top n positions include ones which may finally be ranked below the (n+m)-th place. In order to find out which documents are truly ranked within the top n places from among those with established ranks within the top (n+m) positions, one can access the sequential file for documents ranked within the top (n+m) places and strictly calculate the score (just as previously performed), or alternatively let a human make the selection after outputting all the contents of the documents.

As an extreme example, if m is the total number of retrieval objects, it can be said that ranks down to n-th place are included within the object, without examining the retrieval conditions. Using such a large m is meaningless, because numerous superfluous results will be obtained but with a suitably sized m this approach will provide a faster means for finding out objects above n-th place.

Essentially, quantitative retrieval is a means for processing ambiguous queries. In this context, ending the retrieval process to output the result at a stage when the range of retrieval objects with high scores has been narrowed down to a certain extent is believed to be a reasonable approach if speed-up of retrieval is thereby attained.

## Claims

1. In a database system including:
a sequential file (15) in external storage from which data relating to a retrieval object are outputted by inputting an identifier for said retrieval object;
a transposed file (11) in external storage containing data, including identifiers, relating to retrieval objects that include a specified access key, and from which said data are outputted by inputting the specified access key; and
query inputting means for inputting a query expressed as a combination of specified access keys with given weighting coefficients, and the number n of retrieval objects to be outputted;
an information retrieval method comprising the following steps:
in response to the input of a query, accessing the transposed file for each access key in turn, wherein the access keys are selected from the inputted query based on the values of said weighting coefficients, and copying into main storage (12) data from the transposed file that relates to each access key;
calculating both the instantaneous query score and the maximum anticipated final query score for each retrieval object, based on the contents of the inputted query and the data copied from the transposed file;
establishing the n retrieval objects (14) with the highest score by stopping the selection of access keys when the retrieval object with the n th largest instantaneous query score has an instantaneous query score larger than the maximum anticipated final query score of each retrieval object having an instantaneous query score less than that of said retrieval object with the n th largest instantaneous query score; and
accessing the sequential file using the identifiers of said n retrieval objects with the highest query score.

2. In a database system including:
a sequential file (15) in external storage from which data relating to a retrieval object are outputted by inputting an identifier for said retrieval object;
a transposed file (11) in external storage containing data, including identifiers, relating to retrieval objects that include a specified access key, and from which said data are outputted by inputting the specified access key; and
query inputting means for inputting a query expressed as a combination of specified access keys with given weighting coefficients, and the number n of retrieval objects to be outputted;
an information retrieval method comprising the following steps:
in response to the input of a query, accessing the transposed file for each access key in turn, wherein the access keys are selected from the inputted query based on the values of said weighting coefficients, and copying into main storage (12) data from the transposed file that relates to each access key;
calculating both the instantaneous query score and the maximum anticipated final query score for each retrieval object, based on the contents of the inputted query and the data copied from the transposed file;
establishing the n retrieval objects (14) with the highest score to sufficient accuracy by stopping the selection of access keys when the retrieval object with the n th largest instantaneous query score has an instantaneous query score larger than the maximum anticipated final query score of each retrieval object having an instantaneous query score less than that of said retrieval object with the n+m th largest instantaneous query score, where m is an integer larger than 2; and
accessing the sequential file using the identifiers of said n retrieval objects with the highest query score.

3. A method as claimed in claims 1 or 2, further including the steps of:
preparing a transposed table (32) in main storage from the data copied into main storage from the transposed file; and
preparing a sequential table (34) in main storage by interchanging the rows and columns of the transposed table, and using the data therein during said step of calculating the query scores.

4. A method as claimed in any preceding claim, wherein the access keys include access keys differing in weight depending on the retrieval objects, and wherein the access keys are selected, based on the product of the weight of each access key and said given weighting coefficient of each access key.

5. A method as claimed in claim 4, wherein for each of said access keys differing in weight depending on the retrieval objects, the retrieval object identifiers are arranged in the transposed file (41) in order of the weight.

## Patentansprüche

1. Ein Datenbanksystem, in dem enthalten sind:
im externen Speicher eine sequentielle Datei (15), aus der Daten, die sich auf ein Wiedergewinnungsobjekt beziehen, ausgegeben werden, indem ein Identifizierungszeichen für das Wiedergewinnungsobjekt eingegeben wird;
im externen Speicher eine ausgetauschte Datei (11), wobei diese Daten enthält, die Identifizierungszeichen enthalten, die sich auf die Wiedergewinnungsobjekte beziehen, die ein spezifiziertes Paßwort enthalten, und aus der diese Daten ausgegeben werden, indem das spezifizierte Paßwort eingegeben wird; und
Abfrageeingabemittel, um eine Abfrage, die als eine Kombination aus spezifizierten Paßwörtern mit gegebenen Wichtungskoeffizienten und der Anzahl n der Wiedergewinnungsobjekte, die ausgegeben werden sollen, ausgedrückt wird, einzugeben;
ein Verfahren zur Informations-Wiedergewinnung, das die folgenden Schritte enthält, um
als Reaktion auf die Eingabe einer Abfrage, auf die ausgetauschte Datei bei jedem Paßwort zuzugreifen, wobei die Paßwörter von der eingegebenen Abfrage ausgewählt werden, die auf den Werten der Wichtungskoeffizienten basiert, und die Daten aus der ausgetauschten Datei, die zu jedem Paßwort gehören, in den Hauptspeicher (12) kopiert werden;
sowohl die augenblickliche Abfragequote als auch die maximal erwartete, endgültige Abfragequote für jedes Wiedergewinnungsobjekt zu berechnen, das auf den Inhalten der eingegebenen Abfrage und auf den Daten basiert, die aus der ausgetauschten Datei kopiert wurden;
n-Wiedergewinnungsobjekte (14) mit der höchsten Quote zu erstellen, wobei die Auswahl der Paßwörter gestoppt wird, wenn das Wiedergewinnungsobjekt mit der augenblicklich n-größten Abfragequote eine augenblickliche Abfragequote hat, die größer ist als die maximal erwartete, endgültige Abfragequote für jedes Wiedergewinnungsobjekt mit einer augenblicklichen Abfragequote, die kleiner als die des Wiedergewinnungsobjekts mit der n-größten augenblicklichen Abfragequote ist; und
auf die sequentielle Datei zuzugreifen, wobei die Identifizierungszeichen der n-Wiedergewinnungsobjekte mit der höchsten Abfragequote verwendet werden.

2. Ein Datenbanksystem, in dem enthalten sind:
im externen Speicher eine sequentielle Datei (15), aus der Daten, die sich auf ein Wiedergewinnungsobjekt beziehen, ausgegeben werden, indem ein Identifizierungszeichen für das Wiedergewinnungsobjekt eingegeben wird;
im externen Speicher eine ausgetauschte Datei (11), wobei diese Daten enthält, die Identifizierungszeichen enthalten, die sich auf die Wiedergewinnungsobjekte beziehen, die ein spezifiziertes Paßwort enthalten, und aus der diese Daten ausgegeben werden, indem das spezifizierte Paßwort eingegeben wird; und
Abfrageeingabemittel, um eine Abfrage, die als eine Kombination aus spezifizierten Paßwörtern mit gegebenen Wichtungskoeffizienten und der Anzahl n der Wiedergewinnungsobjekte, die ausgegeben werden sollen, ausgedrückt wird, einzugeben;
ein Verfahren zur Informations-Wiedergewinnung, das die folgenden Schritte enthält, um
als Reaktion auf die Eingabe einer Abfrage, auf die ausgetauschte Datei bei jedem Paßwort zuzugreifen, wobei die Paßwörter von der eingegebenen Abfrage ausgewählt werden, die auf den Werten der Wichtungskoeffizienten basiert, und die Daten aus der ausgetauschten Datei, die zu jedem Paßwort gehören, in den Hauptspeicher (12) kopiert werden;
sowohl die augenblickliche Abfragequote als auch die maximal erwartete, endgültige Abfragequote für jedes Wiedergewinnungsobjekt zu berechnen, das auf den Inhalten der eingegebenen Abfrage und auf den Daten basiert, die aus der ausgetauschten Datei kopiert wurden;
n-Wiedergewinnungsobjekte (14) mit der höchsten Quote in ausreichender Genauigkeit zu erstellen, wobei die Auswahl der Paßwörter gestoppt wird, wenn das Wiedergewinnungsobjekt mit der augenblicklich n-größten Abfragequote eine augenblickliche Abfragequote hat, die größer ist als die maximal erwartete, endgültige Abfragequote für jedes Wiedergewinnungsobjekt mit einer augenblicklichen Abfragequote, die kleiner als die des Wiedergewinnungsobjekts mit der n+m-größten augenblicklichen Abfragequote ist; und
auf die sequentielle Datei zuzugreifen, wobei die Identifizierungszeichen der n-Wiedergewinnungsobjekte mit der höchsten Abfragequote verwendet werden.

3. Ein Verfahren wie in den Ansprüchen 1 oder 2 angemeldet, das außerdem Schritte enthält, um
eine ausgetauschte Tabelle (32) im Hauptspeicher aus den Daten, die aus der ausgetauschten Datei in den Hauptspeicher kopiert wurden, vorzubereiten; und
eine sequentielle Tabelle (34) im Hauptspeicher vorzubereiten, indem die Reihen und Spalten der ausgetauschten Tabelle ausgetauscht, und die darin enthaltenen Daten während des Schritts der Abfragequotenberechnung verwendet werden.

4. Ein Verfahren wie in irgendeinem vorhergehenden Anspruch angemeldet, wobei die Paßwörter Paßwörter enthalten, die sich in der Wichtung unterscheiden, die abhängig ist von den Wiedergewinnungsobjekten und, wobei die Paßwörter, basierend auf dem Produkt der Wichtung jedes Paßworts und auf dem gegebenen Wichtungskoeffizienten jedes Paßworts, ausgewählt werden.

5. Ein Verfahren wie in Anspruch 4 angemeldet, wobei für jedes der Paßwörter, die sich in der Wichtung unterscheiden, die von den Wiedergewinnungsobjekten abhängt, die Identifizierungszeichen des Wiedergewinnungsobjekts in der ausgetauschten Datei (41) nach der Wichtung geordnet sind.

## Revendications

1. Dans un système de base de données comprenant:
un fichier séquentiel (15) dans une mémoire externe d'où les données relatives à un objet de recherche documentaire sont sorties en entrant un identificateur destiné au dit objet de recherche;
un fichier permuté (11) dans une mémoire externe contenant des données, y compris des identificateurs, relatives à des objets de recherche qui comprennent une clé pour un accès spécifié, et d'où les dites données sont sorties en entrant la clé d'accès spécifié; et
un moyen d'entrer les interrogations pour entrer une interrogation exprimée par une combinaison de clés pour accès spécifiés avec des coefficients de pondération donnés, et le nombre n d'objets de recherche à sortir;
méthode de recherche documentaire comprenant les phases suivantes:
en réponse à l'entrée d'une interrogation, accéder tout à tour au fichier permuté pour chaque clé d'accès, où les clés d'accès sont sélectées à partir de l'interrogation entrée en se basant sur les valeurs des dits coefficients de pondération, et copier dans la mémoire principale (12) les données du fichier permuté relatives à chaque clé d'accès;
calculer à la fois le classement instantané des interrogations et le classement final, anticipé, maximal des interrogations pour chaque objet de recherche, en se basant sur le contenu de l'interrogation entrée et les données copiées à partir du fichier permuté;
établir quels sont les n objets de recherche documentaire (14) avec le classement le plus élevé en arrêtant la sélection des clés d'accès quand l'objet de recherche qui a le n^{ième} plus grand classement instantané des interrogations a un classement instantané d'interrogation supérieur au classement final, anticipé, maximal des interrogation pour chaque objet de recherche ayant un classement d'interrogation instantané inférieur à celui du dit objet de recherche avec le n^{ième} plus grand classement instantané; et
accéder au fichier séquentiel en utilisant les identificateurs des dits n objets de recherche ayant le classement d'interrogation le plus haut.

2. Dans un système de base de données comprenant:
un fichier séquentiel (15) dans une mémoire externe d'où les données relatives à un objet de recherche sont sorties en entrant un identificateur destiné au dit objet de recherche;
un fichier permuté (11) dans une mémoire externe contenant des données, y compris des identificateurs, relatives à des objets de recherche documentaire qui comprennent une clé pour un accès précis, et d'où les dites données sont sorties en entrant la clé d'accès spécifié; et
un moyen d'entrer les interrogations pour entrer une interrogation exprimée sous forme d'une combinaison de clés d'accès spécifiés avec des coefficients de pondération donnés, et le nombre n d'objets de recherche documentaire à sortir;
en réponse à l'entrée d'une interrogation, accéder tout à tour au fichier permuté pour chaque clé d'accès, où les clés d'accès sont sélectées à partir de l'interrogation entrée, en se basant sur les valeurs des dits coefficients de pondération, et copier dans la mémoire principale (12) les données du fichier permuté relatives à chaque clé d'accès;
calculer à la fois le classement instantané des interrogations et le classement final, anticipé, maximal des interrogations pour chaque objet de recherche, en se basant sur le contenu de l'interrogation entrée et les données copiées à partir du fichier permuté;
établir avec une précision suffisante quels sont les n objets de recherche (14) ayant le classement le plus haut, en stoppant la sélection des clés d'accès quand l'objet de recherche ayant le n^{ième} plus haut classement instantané d'interrogation a un classement instantané d'interrogation supérieur au classement final, anticipé, maximal de chaque objet de recherche ayant un classement instantané d'interrogation inférieur à celui du dit objet de recherche avec le n+m plus haut classement instantané d'interrogation, où m est un nombre entier supérieur à 2; et
accéder au fichier séquentiel en utilisant les identificateurs des dits n objets de recherche ayant le classement d'interrogation le plus élevé.

3. Méthode telle que revendiquée dans les revendications 1 ou 2, comprenant en outre les phases suivantes:
préparer une table permutée (32) dans la mémoire principale, à partir des données copiées dans la mémoire principale à partir du fichier permuté; et
préparer une table séquentielle (34) dans la mémoire principale en interchangeant les rangées et les colonnes de la table permutée, et utiliser lors de ladite phase de calcul des classements d'interrogation les données qui y sont contenues.

4. Méthode telle que revendiquée dans l'une quelconque des revendications précédentes, où les clés d'accès comprennent des clés d'accès dont les priorités diffèrent en fonction des objets de recherche, et où les clés d'accès sont sélectées, sur la base du produit de la priorité de chaque clé d'accès et du dit coefficient de pondération donné de chaque clé d'accès.

5. Méthode telle que revendiquée dans la revendication 4, où, pour chacune des dites clés d'accès dont les priorités diffèrent en fonction des objets de recherche, les identificateurs des objets de recherche sont arrangés dans le fichier permuté (41) suivant leur priorité.
